# EUROPÄISCHE PATENTSCHRIFT

(11) **EP 1 920 998 B1**
(45) Veröffentlichungstag und Bekanntmachung des Hinweises auf die Patenterteilung: **01.12.2010**
(21) Anmeldenummer: 07021163.6
(22) Anmeldetag: 30.10.2007
(51) Int. Cl.: B62D 25/16, B62D 65/16

(54) **Kraftfahrzeugkarosserie und Montageverfahren dafür**
Motor vehicle bodywork and assembly method therefor
Carrosserie de véhicule automobile et procédé de montage de celle-ci

(30) Priorität: 10.11.2006 DE 102006053015
(43) Veröffentlichungstag der Anmeldung: 14.05.2008
(73) Patentinhaber: GM Global Technology Operations, Inc., Detroit, MI 48265-3000 (US)
(72) Erfinder: Steller, Claus, 64521 Gross-Gerau (DE)
(74) Vertreter: Daniel, Ulrich W.P.

(56) Entgegenhaltungen:
- EP-A- 1 138 579
- EP-A- 1 398 249
- EP-A- 1 403 175
- WO-A-98/18670
- FR-A- 2 815 090
- JP-A- 58 053 571
- JP-A- 63 222 951
- JP-A- 2004 168 261
- US-A1- 2006 157 350

## Beschreibung

Die vorliegende Erfindung betrifft eine Kraftfahrzeugkarosserie und ein Verfahren zu deren Montage.

Bei den gegenwärtigen Kraftfahrzeugkarosserien bestehen die tragenden Teile des Rohbaus sowie die Teile der Außenhaut wie etwa Front- und Heckklappe, Türen, Kotflügel aus Metall und werden zusammengebaut, bevor die Karosserie als Ganzes lackiert wird. Um das Gewicht eines Fahrzeuges und damit dessen Treibstoffverbrauch zu verringern, ist es an sich interessant, Teile der Außenhaut aus Kunststoff zu fertigen. Dabei tritt jedoch das Problem auf, dass aus preiswerten Kunststoffen gefertigte Außenhautteile sich meist nicht dafür eignen, zusammen mit den Metallteilen der Karosserie in einem Arbeitsgang lackiert zu werden, sei es, weil sie nicht gegen die im Lackierprozess auftretenden hohen Temperaturen in der Größenordnung von 200°C beständig sind, weil sie mit verwendeten Lösungsmitteln inkompatibel sind, oder aus anderen Gründen. Bei Stoßfängerverkleidungen, die bei gegenwärtigen Kraftfahrzeugkarosserien bereits verbreitet aus Kunststoff gefertigt werden, ist eine Montage nach dem Lackieren möglich, da ihre Position bei der Montage so mit der Position der bereits vorhandenen Metallteile abgeglichen werden kann, dass sich zwischen diesen Metallteilen und der Stoßfängerverkleidung gleichmäßig breite Fugen ergeben. Bei den Kotflügeln ist dies im Allgemeinen nicht der Fall. Deren Montage erfolgt üblicherweise in zwei Schritten, wobei in einem ersten Schritt eine an eine bereits montierte Tür der Karosserie angrenzende Kante des Kotflügels in Bezug auf die Tür so ausgerichtet wird, dass sich zwischen beiden eine gleichmäßige Spaltbreite ergibt und der Kotflügel das Öffnen der Tür nicht behindert, gefolgt von einem Schwenken der zu einer gleichen Klappe der Karosserie benachbarten Kotflügel derart, dass die Klappe zwischen beiden mit gleichmäßiger Spaltbreite Platz findet. Um die Klappe montieren zu können, müssen demzufolge die ihr benachbarten Kotflügel vorher montiert sein. Wenn die Klappe dem Lackierprozess unterzogen werden soll, die Kotflügel hierfür aber nicht geeignet sind, müssten sie nach Anbringung der Klappe wieder entfernt und nach der Lackierung erneut montiert werden, was den Fertigungsaufwand in unzweckmäßiger Weise erhöht.

Aus FR 2 815 090 A1 ist eine Kraftfahrzeugkarosserie mit einem Lackierbeständigen Rohbau und wenigstens einem Kotflügel, der an dem Rohbau durch einen Kotflügelträger gehalten und an dem Kotflügelträger befestigbar ist, bekannt.

WO 98/18670 A1 offenbart eine Kraftfahrzeugkarosserie, die aus mehreren getrennt voneinander lackierten Komponenten zusammengefügt ist.

EP 1 403 175 A2 lehrt einen Kotflügelaufbau an Kraftfahrzeugen, bei dem eine Kotflügelbank einerseits mit einem tragenden Teil der Karosserie und andererseits mit einem Kotflügel fest verbunden ist.

EP 1 398 249 A1 beschreibt den Aufbau einer Kraftfahrzeugkarosserie mit einem Rahmen, einem Kotflügel und einem den Rahmen und den Kotflügel verbindenden Träger, dessen Position am Rahmen mit Hilfe von in überdimensionierte Löcher des Trägers eingreifenden Schrauben anpassbar ist.

Aufgabe der vorliegenden Erfindung ist, eine Kraftfahrzeugkarosserie und ein Montageverfahren dafür anzugeben, die es auf wirtschaftliche Weise ermöglichen, Kotflügel zu verbauen, die für eine Lackierung zusammen mit dem Rohbau der Karosserie nicht geeignet sind.

Die Aufgabe wird gelöst durch eine Kraftfahrzeugskarosserie mit den Merkmalen des Anspruchs 1 sowie durch ein Verfahren mit den Merkmalen des Anspruchs 11. Um dem Kotflügel an verschiedenen, weist auseinanderliegenden Punkten fixieren zu können, umfasst der Kotflügelträger zweckmäßigerweise einen ein Radhaus des Fahrzeuges überbrückenden Bügel und zwei sich von dem Bügel aus beiderseits des Radhauses abwärts erstreckende Arme. Die erfindungsgemäße Karosserie ermöglicht ein Montageverfahren, bei dem an dem bereitgestellten Rohbau zunächst der Kotflügelträger ausgerichtet und befestigt wird und, nachdem der Rohbau zusammen mit dem Kotflügelträger lackiert worden ist, der Kotflügel an einer durch den Kotflügelträger definierten Stelle montiert wird.

D.h. anstelle des Kotflügels wird zunächst stellvertretend für diesen nur der Kotflügelträger montiert, wobei die Montage des Kotflügelträgers so wie herkömmlicherweise die des Kotflügels selber so erfolgen kann, dass eine gewünschte Spaltbreite zwischen dem zwar noch nicht montierten, aber in seiner Position durch den Kotflügelträger definierten Kotflügel und angrenzenden Teilen der Außenhaut gewährleistet ist. So kann insbesondere nach Montage der Kotflügelträger, aber vor Montage der Kotflügel selbst, eine Haube korrekt montiert und justiert werden, die später von den von den Kotflügelträgern getragenen Kotflügeln flankiert ist.

Zweckmäßigerweise sind Kotflügel und Kotflügelträger so ausgelegt, dass der Kotflügel an dem Kotflügelträger nur in einer einzigen Stellung befestigbar ist.

Damit bei der Montage des Kotflügels diese einzige Stellung leicht gefunden werden kann, weisen der Kotflügelträger und der Kotflügel vorzugsweise zusammenwirkende Führungsoberflächen auf, die in Kontakt miteinander eine Bewegung des noch unbefestigten Kotflügels gegen den Kotflügelträger in zwei Freiheitsgraden führen, wobei durch diese Bewegung besagte einzige Stellung erreichbar ist.

Um das Auffinden der einzigen Stellung weiter zu erleichtern, ist zweckmäßigerweise eine der Führungsoberflächen eine ebene Fläche, die eine zweite ebene Fläche kreuzt. Die Linie, in der sich die zwei ebenen Flächen kreuzen, bildet einerseits eine leicht zu findende Bezugsmarke für die Positionierung des Kotflügels und zum anderen gibt sie eine bevorzugte Bewegungsrichtung vor, in welcher der Kotflügel zu der einzigen Stellung bewegt werden kann.

Um diese einzige Stellung eindeutig zu markieren, hat von Kotflügelträger und Kotflügel vorzugsweise der eine wenigstens eine Öffnung und der andere einen Vorsprung, der bei der fertig montierten Fahrzeugkarosserie formschlüssig in die Öffnung eingesteckt ist.

Der Kotflügelträger ist am Rohbau vorzugsweise durch Schrauben befestigt, die sich im Wesentlichen in Längsrichtung der Karosserie erstreckende Langlöcher des Kotflügelträgers durchsetzen. Diese Langlöcher erzeugen ein Spiel des Kotflügelträgers in der Fahrzeuglängsrichtung, das insbesondere eine Ausrichtung des Kotflügels in Bezug auf eine benachbarte Tür ermöglicht. Indem die Schrauben die Langlöcher ferner mit einem Spiel in Querrichtung der Karosserie durchsetzen, wird darüber hinaus die Möglichkeit geschaffen, den Kotflügelträger beim Ausrichten zu drehen oder in der Querrichtung zu verschieben.

Als Schutzmaßnahme für den Fall eines Zusammenstoßes mit einem Fußgänger (Pedestrian Protection) kann vorgesehen sein, dass ein oberer Bereich des Kotflügels an dem Kotflügelträger über wenigstens ein vertikal und/oder in Fahrtrichtung nachgiebiges Pufferelement abgestützt ist.

Der Kotflügel kann Teil eines von dem Kotflügelträger gehaltenen Kotflügelmoduls sein, das ferner wenigstens einen Scheinwerfer oder eine Scheinwerferfassung umfasst.

Alternativ kann ein Scheinwerfer oder eine Scheinwerferfassung in den Kotflügelträger selbst integriert sein.

Der Kotflügel kann aus einem thermoplastischen Kunststoff, insbesondere aus Polypropylen, gefertigt sein.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: eine perspektivische Ansicht eines Kotflügelträgers mit Pufferelementen gemäß der vorliegenden Erfindung;
- Fig. 2: den Kotflügelträger aus Fig. 1 montiert an einem Karosserierohbau;
- Fig.3: eine Draufsicht auf einen oberen Abschnitt des Kotflügelträgers;
- Fig. 4: einen Schnitt entlang der in Fig. 3 mit IV bezeichneten Ebene
- Fig. 5: einen Schnitt entlang der in Fig. 3 mit V bezeichneten Ebene;
- Fig. 6: eine perspektivische Ansicht eines Bruchstücks des Kotflügels;
- Fig. 7: einen Schnitt durch den vorderen Arm des Kotflügelträgers, am Karosserierohbau befestigt und mit einem daran montierten Kotflügel;
- Fig. 8: einen Schnitt durch den hinteren Arm des Kotflügelträgers, ebenfalls am Karosserierohbau befestigt und mit daran montiertem Kotflügel; und
- Fig. 9: eine zu Fig. 2 analoge Ansicht eines abgewandelten Kotflügelträgers.

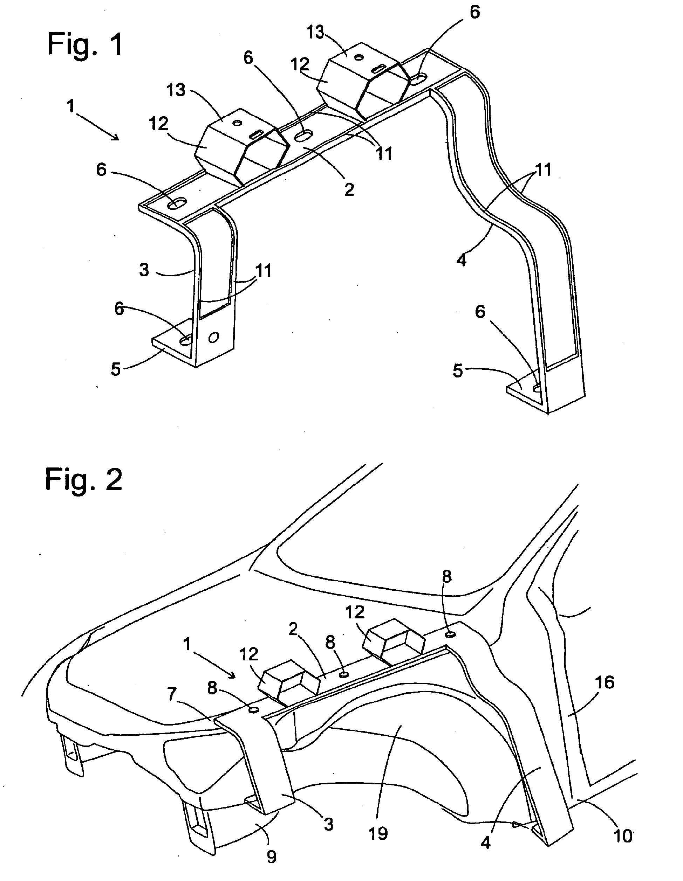

Der in Fig. 1 und 2 gezeigte Kotflügelträger 1 umfasst einen langgestreckten Bügel 2, von dessen Enden jeweils ein Arm 3 bzw. 4 absteht. Die nach unten gekrümmten Arme 3, 4 laufen jeweils in eine abgewinkelte Lasche 5 aus. Über die Länge des Bügels 2 sind Langlöcher 6 verteilt, die zur Befestigung des Kotflügelträgers 1 auf einer Kotflügelbank 7 eines Karosserierohbaus mit Hilfe von Schrauben 8 dienen. Zu den Langlöchern 6 des Bügels parallele Langlöcher 6 sind in den Laschen 5 gebildet, um diese am Rohbau, zum Beispiel benachbart zum vorderen Ende eines Längsträgers 9 oder an einem Schweller 10, zu befestigen.

Der Bügel 2 und die Arme 3, 4 sind hier einstückig aus einem hitzebeständigen Kunststoff spritzgeformt. Zur Versteifung sind der Bügel 2 und die Arme 3 an ihren Rändern jeweils durch umlaufende Rippen 11 verstärkt. Alternativ könnten der Bügel 2 und die Arme 3, 4 auch aus Metall gefertigt sein.

Zwischen je zwei der Langlöcher 6 trägt der Bügel 2 an seiner Oberseite jeweils ein Pufferelement 12, hier in Form einer Hülse von sechseckigem Querschnitt mit einer Oberseite 13, die vorgesehen ist, um den in Fig. 1, 2 nicht dargestellten Kotflügel zu unterstützen Die Festigkeit der Pufferelemente 12 ist so bemessen, dass sie unter den beim normalen Gebrauch eines Kraftfahrzeuges auftretenden Belastungen im Wesentlichen formbeständig sind, dass sie aber unter Energieaufnahme flachgedrückt werden, falls bei einem Unfall ein Fußgänger von oben auf den Kotflügel aufschlägt. Da die Längsachse der Hülsen 12 im Wesentlichen in Querrichtung der Fahrzeugkarosserie orientiert ist, sind die Hülsen 12 auch in der Lage, einer bei einem Zusammenstoß von vorn einwirkenden Kraft nachzugeben und dabei Energie aufzunehmen.

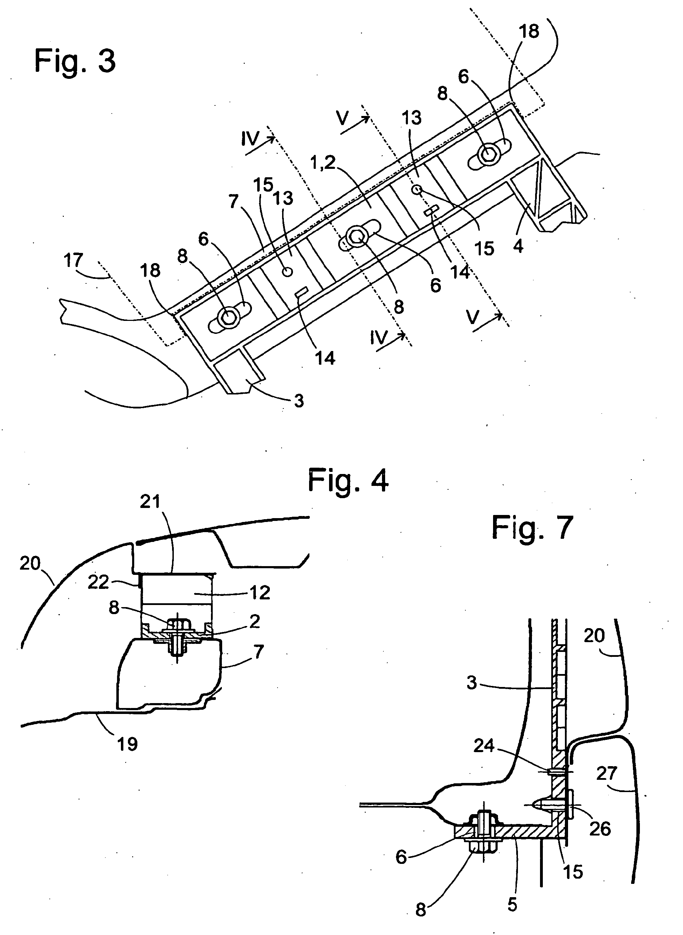

Fig. 3 zeigt eine Draufsicht auf den Kotflügelträger 1 und die Kotflügelbank 7, an der er durch die Schrauben 8 verankert ist. An den Oberseiten 13 der Pufferelemente 12 sind jeweils zwei Öffnungen, eine langgestreckte Öffnung 14 und eine runde Öffnung 15 zu sehen. Diese Öffnungen definieren in später noch genauer zu beschreibender Weise die Position des Kotflügels in Bezug auf den Kotflügelträger 1. Da der Kotflügelträger 1 die Position des Kotflügels eindeutig vorgibt, kann durch Ausrichten des Kotflügelträgers 1 in Bezug auf benachbarte Karosserieteile sichergestellt werden, dass der Kotflügelträger 1, wenn er später montiert wird, in Bezug auf diese Karosserieteile korrekt positioniert sein wird. Mit Hilfe einer hier nicht dargestellten Lehre, die einerseits an einem Türrahmen 16 (siehe Fig.2) oder einer daran montierten Tür und andererseits an dem Arm 4 in Anschlag gebracht wird, wird der Kotflügelträger 1 so ausgerichtet, dass sich bei der späteren Montage des Kotflügels eine gewünschte Spaltbreite zwischen diesem und der Tür ergibt. Da die Schrauben 8 die Langlöcher 6 mit einem Spiel auch in Querrichtung durchsetzen, ist es möglich, den Kotflügelträger 1 in Maßen quer zu verschieben und um eine vertikale Achse zu drehen. Mit Hilfe einer in Fig. 3 teilweise als strichpunktierter Umriss angedeuteten Haubenlehre 17 werden zwei sich gegenüberliegende Kotflügelträger 1 so aufeinander ausgerichtet, dass in Fig. 3 mit 18 bezeichnete Ecken ihrer Bügel 2 exakt ein symmetrisches Trapez von durch die Haubenlehre 17 vorgegebener Gestalt bilden. Die in der so erhaltenen Position fixierten Kotflügelträger 1 dienen anschließend als Referenz für die Montage einer nicht dargestellten Haube.

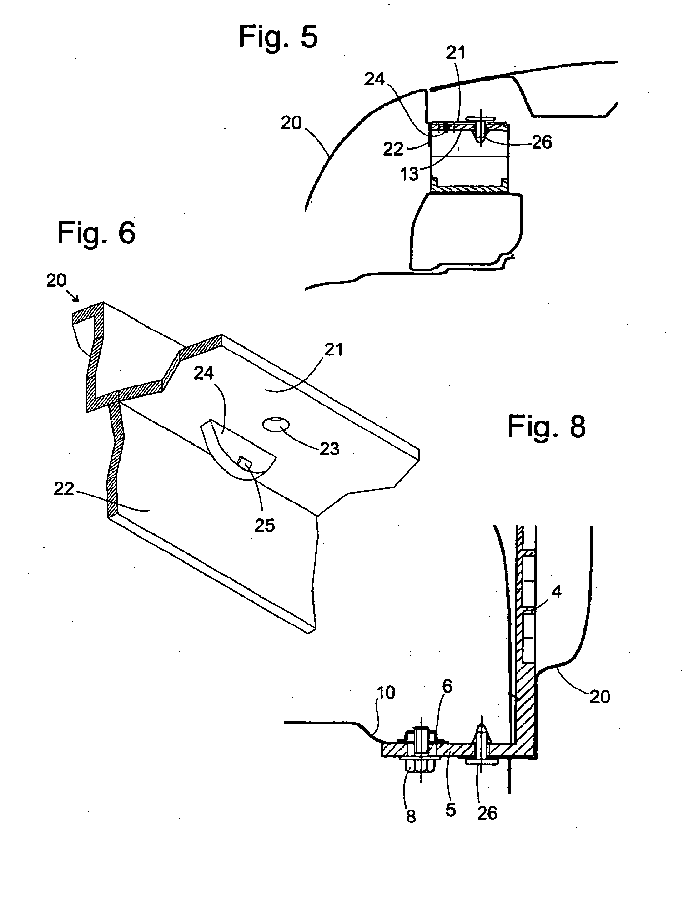

Fig. 4 zeigt einen schematischen Teilschnitt durch die fertig zusammengebaute Karosserie entlang der in Fig. 3 mit IV bezeichneten Ebene. Der Schnitt erstreckt sich durch ein Langloch 6 und zeigt die darin aufgenommene Schraube 8, die den Bügel 2 an der Kotflügelbank 7 fixiert. Unterhalb der Kotflügelbank 7 ist eine Wand 19 eines Radkastens zu erkennen. Der aus Polypropylen geformte Kotflügel 20 hat einen horizontalen Randstreifen 21, der auf den Pufferelementen 12 ruht. Der Randstreifen 21 ist begrenzt durch eine vertikale Anschlagflanke 22. Diese Anschlagflanke 22 kann sich abschnittsweise oder vorzugsweise durchgehend entlang des gesamten Randstreifens 21 erstrecken. Wenn der Kotflügel 20 montiert wird, verdeckt der Randstreifen 21 die Sicht eines Monteurs auf den Kotflügelträger 1, was an sich die exakte Platzierung des Kotflügels 20 erschwert. Erfindungsgemäß ist aber dennoch eine einfache und schnelle Montage des Kotflügels 20 möglich, da es genügt, zunächst den Randstreifen 21 beliebig auf den Oberseiten 13 der Pufferelemente 12 zu platzieren. Anschließend wird der Kotflügel 20 lediglich zur Fahrzeugmitte hin verschoben, bis die Anschlagflanke 22 gegen die Pufferelemente 12 stößt. Ab dann genügt es, den Kotflügel 20 unter Beibehaltung des Kontaktes der Anschlagflanke 22 mit den Pufferelementen 12 in Fahrzeuglängsrichtung zu verschieben, bis die runden Öffnungen 15 der Pufferelemente sich mit entsprechenden Öffnungen 23 (siehe Fig. 6) des Randstreifens 21 überschneiden. In Fig. 6, die ein Bruchstück des Kotflügels 20 mit Randstreifen 21 und Anschlagflanke 22 zeigt, erkennt man, dass der Öffnung 23 benachbart ein Vorsprung 24 an dem Randstreifen 21 gebildet ist. Wenn beim Verschieben des Kotflügels 20 der Vorsprung 24 gegen ein Pufferelement 12 stößt, gleitet er auf dessen Oberseite 13 hinauf, bis er schließlich in deren langgestreckte Öffnung 14 hineinfällt. Diese Öffnung 14 füllt der Vorsprung 24 formschlüssig aus. Darüber hinaus dienen Rasthaken 25 des Vorsprunges 24 zur vorläufigen Verankerung (Montagehilfe) in der Öffnung 14.

In dieser verankerten Stellung fluchten die Öffnungen 15 und 23, und durch einfaches Hindurchstecken eines mit Widerhaken besetzten Clips 26 (siehe Fig. 5) durch die Öffnungen wird der Kotflügel 20 an dem Kotflügelträger 1 in einer exakt vorgegebenen Stellung befestigt. Dieser Zustand ist in Fig. 5 veranschaulicht, die einen zu Fig. 4 parallelen Schnitt entlang der in Fig. 3 mit V bezeichneten Ebene zeigt.

Fig. 7 zeigt einen Schnitt durch das untere Ende des vorderen Armes 3 des Kotflügelträgers 1 und dessen Umgebung an der fertig montierten Kraftfahrzeugkarosserie. Eine Schraube 8, die das Langloch 6 der Lasche 5 durchsetzt, fixiert das untere Ende des Armes 3 an einer Wand des Radkastens XX oder einem anderen geeigneten Teil des Karosserierohbaus. Ein unterer Randbereich des Kotflügels 20 liegt, verdeckt von einer Stoßfängerverkleidung 27, am unteren Ende des Armes 3 an. Wie der Randstreifen 21 trägt dieser untere Randbereich einen Rastvorsprung 24, der in eine entsprechende Öffnung des Armes 3 eingreift und dadurch eine Stellung des Kotflügels 20 definiert, in welcher eine benachbarte Öffnung 15 des Armes 3 mit einer Öffnung des Kotflügels 20 fluchtet, so dass der Kotflügel durch einen durch beide Öffnungen hindurch gesteckten Clip 26 befestigbar ist.

Fig. 8 zeigt in einem zu Fig. 7 analogen Schnitt das untere Ende des hinteren Armes 4. Eine Schraube 8, die das Langloch 6 der Lasche 5 durchsetzt, fixiert das untere Ende des Armes 4 an einer Wand des Schwellers 10 (diese Positionsnummer fehlt im Bild) oder einem anderen geeigneten Teil des Karosserierohbaus. Der Kotflügel 20 ist an seinem unteren Rand abgewinkelt und erstreckt sich über die Lasche 5. Er ist für einen neben dem Fahrzeug stehenden Betrachter unsichtbar durch einen Clip 26 befestigt, der von unten her in fluchtende Öffnungen des Randbereiches und der Lasche 5 eingesteckt ist.

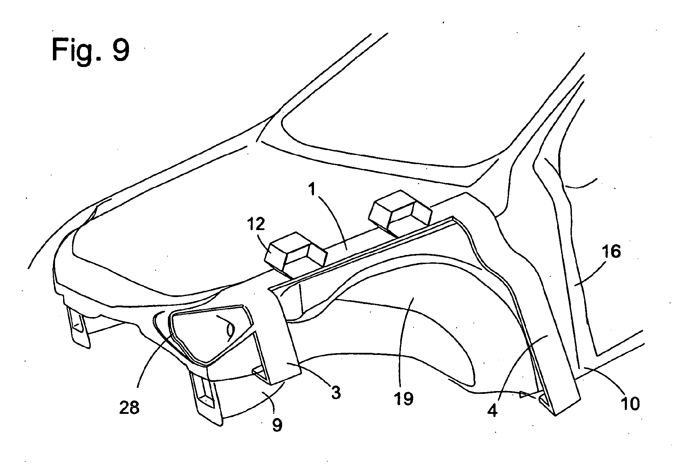

Bei der obigen Beschreibung wurde angenommen, dass der Kotflügelträger 1 ausschließlich der Befestigung des plattenartigen Kotflügels 20 an der Fahrzeugkarosserie dient. Selbstverständlich kann ein solcher Kotflügel auch mit anderen Bauteilen des Fahrzeuges, wie etwa insbesondere einem Scheinwerfer oder einer Scheinwerferfassung, zu einem Modul vormontiert sein, welches als eine Einheit an dem Kotflügelträger platziert und befestigt wird. Genauso ist es möglich, derartige Bauteile mit dem Kotflügelträger selber zu einem Modul zusammenzufassen; im einen wie im anderen Falle ist die Position der zusätzlichen Bauteile in Bezug auf den Kotflügel eindeutig festgelegt und in Bezug auf benachbarte Karosserieteile über den Kotflügelträger 1 ausrichtbar. Zur Veranschaulichung zeigt Fig. 9 eine zu Fig. 2 analoge Ansicht, bei der eine Fassung 28 für einen Scheinwerfer in dem Kotflügelträger 1 integriert ist.

### Bezugszeichenliste

- Kotflügelträger: 1
- Bügel: 2
- Arme: 3, 4
- Lasche: 5
- Langlöcher: 6
- Kotflügelbank: 7
- Schrauben: 8
- Längsträgers: 9
- Schweller: 10
- Rippen: 11
- Pufferelement: 12
- Oberseite: 13
- Öffnung: 14, 15
- Türrahmen: 16
- Haubenlehre: 17
- Ecke: 18
- Wand: 19
- Kotflügel: 20
- Randstreifen: 21
- Anschlagflanke: 22
- Öffnung: 23
- Vorsprung: 24
- Rasthaken: 25
- Clip: 26
- Stoßfängerverkleidung: 27
- Scheinwerferfassung: 28

## Patentansprüche

1. Kraftfahrzeugkarosserie mit einem lackierbeständigen Rohbau und wenigstens einem Kotflügel (20) aus einem zur gemeinsamen Lackierung mit dem Rohbau ungeeigneten Material, der an dem Rohbau durch einen aus lackierbeständigen Material gefertigten und in Bezug auf den Rohbau ausrichtbaren Kotflügelträger (1) gehalten und an dem Kotflügelträger (1) in einer einzigen Stellung befestigbar ist, wobei der Kotflügelträger (1) einen ein Radhaus (19) überbrückenden Bügel (2) und zwei sich von dem Bügel (2) aus beiderseits des Radhauses (19) abwärts erstreckende Arme (3, 4) aufweist.

2. Kraftfahrzeugkarosserie nach Anspruch 1, **dadurch gekennzeichnet, dass** der Kotflügelträger (1) und der Kotflügel (20) zusammenwirkende Führungsoberflächen (13; 21, 22) aufweisen, die in Kontakt miteinander eine Bewegung des unbefestigten Kotflügels (20) gegen den Kotflügelträger (1) in zwei Freiheitsgraden führen, durch welche die einzige Stellung erreichbar ist.

3. Kraftfahrzeugkarosserie nach Anspruch 2, **dadurch gekennzeichnet, dass** eine der Führungsoberflächen (21; 22) eine ebene Fläche ist, die eine zweite ebene Fläche (22; 21) kreuzt.

4. Kraftfahrzeugkarosserie nach einem der vorhergehenden Ansprüche, **dadurch gekennzeichnet, dass** von Kotflügelträger (1) und Kotflügel (20) der eine wenigstens eine Öffnung (14) und der andere einen formschlüssig in die Öffnung (14) eingesteckten Vorsprung (24) umfasst.

5. Kraftfahrzeugkarosserie nach einem der vorhergehenden Ansprüche, **dadurch gekennzeichnet, dass** der Kotflügelträger (1) am Rohbau durch Schrauben (8) befestigt ist, die sich im Wesentlichen in Längsrichtung der Karosserie erstreckende Langlöcher (6) des Kotflügelträgers (1) durchsetzen.

6. Kraftfahrzeugkarosserie nach Anspruch 5, **dadurch gekennzeichnet, dass** die Schrauben (8) die Langlöcher (6) mit einem Spiel in Querrichtung der Karosserie durchsetzen.

7. Kraftfahrzeugkarosserie nach einem der vorhergehenden Ansprüche, **dadurch gekennzeichnet, dass** der Kotflügel (20) an dem Bügel (2) über wenigstens ein vertikal und/oder in Fahrtrichtung nachgiebiges Pufferelement (12) abgestützt ist.

8. Kraftfahrzeugkarosserie nach einem der vorhergehenden Ansprüche, **dadurch gekennzeichnet, dass** der Kotflügel Teil eines von dem Kotflügelträger gehaltenen Kotflügelmoduls ist, das ferner wenigstens einen Scheinwerfer oder eine Scheinwerferfassung umfasst.

9. Kraftfahrzeugkarosserie nach einem der Ansprüche 1 bis 7, **dadurch gekennzeichnet, dass** wenigstens ein Scheinwerfer oder eine Scheinwerferfassung (28) in den Kotflügelträger (1) integriert ist.

10. Kraftfahrzeugkarosserie nach einem der vorhergehenden Ansprüche, **dadurch gekennzeichnet, dass** der Kotflügel (20) aus einem thermoplastischen Kunststoff gefertigt ist.

11. Verfahren zur Montage einer Kraftfahrzeugkarosserie, insbesondere einer Kraftfahrzeugkarosserie nach einem der vorhergehenden Ansprüche, mit den Schritten:
a) Bereitstellen eines Rohbaus;
b) Justieren und anschließendes Befestigen eines Kotflügelträgers (1) an dem Rohbau;
e) Lackieren des Rohbaus zusammen mit dem Kotflügelträger (1);
f) Montieren eines Kotflügels (20) an einer durch den Kotflügelträger (1) definierten Stelle.

12. Verfahren nach Anspruch 11, **dadurch gekennzeichnet, dass** das Justieren in Schritt b) folgende Teilschritte umfasst:
b1) Justieren des Kotflügelträgers (1) in Bezug auf eine Tür;
b2) Justieren des Kotflügelträgers (1) in Bezug auf eine Haubenlehre (17).

13. Verfahren nach Anspruch 11 oder 12, **dadurch gekennzeichnet, dass** es ferner die Schritte umfasst:
c) Platzieren einer Lehre an dem justierten und befestigten Kotflügelträger (1);
d) Justieren und Befestigen einer Haube anhand der in Schritt c) platzierten Lehre.

14. Verfahren nach einem der Ansprüche 11 bis 13, **dadurch gekennzeichnet, dass,** wenn der Kotflügelträger (1) und der Kotflügel (20) zusammenwirkende Führungsoberflächen (13; 21, 22) aufweisen, die in Kontakt miteinander eine Bewegung des unbefestigten Kotflügels (20) gegen den Kotflügelträger (1) in zwei Freiheitsgraden führen, der Schritt f) das Verschieben des Kotflügels (20) gegen den Kotflügelträger (1) bei sich berührenden Führungsoberflächen (13; 21, 22) bis an die definierte Stelle umfasst.

15. Verfahren nach einem der Ansprüche 11 bis 14, **dadurch gekennzeichnet, dass**, wenn von Kotflügelträger (1) und Kotflügel (20) der eine wenigstens eine Öffnung (14) und der andere einen formschlüssig in die Öffnung (14) einsteckbaren Vorsprung (24) umfasst, der Schritt f) das Einstecken des Vorsprungs (24) in die Öffnung (14) umfasst.

## Claims

1. A motor-vehicle body, comprising a paint-resistant carcass and at least one mudguard (20) which is made of a material that is not suitable for joint painting with the carcass and which is held on the carcass by a mudguard support (1) which is made from a paint-resistant material and is adjustable with respect to the carcass, which mudguard can be fastened to the mudguard support (1) in a single position, wherein the mudguard support (1) comprises a holder (2) bridging a wheel house (19) and two arms (3, 4) extending downwardly from the holder (2) on either side of the wheel house (19).

2. A motor-vehicle body according to claim 1, **characterized in that** the mudguard support (1) and the mudguard (20) comprise cooperating guide surfaces (13; 21, 22) which when in contact with each other guide a movement of the unfastened mudguard (20) against the mudguard support (1) in two degrees of freedom, by which the only position can be reached.

3. A motor-vehicle body according to claim 2, **characterized in that** one of the guide surfaces (21; 22) is a planar surface which crosses a second planar surface (22; 21).

4. A motor-vehicle body according to one of the preceding claims, **characterized in that** concerning the mudguard support (1) and the mudguard (20) the one comprises at least one opening (14) and the other comprises a projection (24) inserted in an interlocking manner in the opening (14).

5. A motor-vehicle body according to one of the preceding claims, **characterized in that** the mudguard support (1) is fastened to the carcass by screws (8) which penetrate oblong holes (6) of the mudguard support (1), which oblong holes extend substantially in the longitudinal direction of the body.

6. A motor-vehicle body according to claim 5, **characterized in that** the screws (8) penetrate the oblong holes (6) with play in the transverse direction of the body.

7. A motor-vehicle body according to one of the preceding claims, **characterized in that** the mudguard (20) rests on the holder (2) via at least one buffer element (12) which is resilient in the vertical direction and/or in the direction of travel.

8. A motor-vehicle body according to one of the preceding claims, **characterized in that** the mudguard is part of a mudguard module which is held by the mudguard support and which further comprises at least one headlight or a headlight socket.

9. A motor-vehicle body according to one of the claims 1 to 7, **characterized in that** at least one headlight or headlight socket (28) is integrated in the mudguard support (1).

10. A motor-vehicle body according to one of the preceding claims, **characterized in that** the mudguard (20) is made of a thermoplastic material.

11. A method for mounting a motor-vehicle body, especially a motor-vehicle body according to one of the preceding claims, with the following steps:
a) provision of a carcass;
b) adjusting and final fastening of a mudguard support (1) to the carcass;
e) painting the carcass together with the mudguard support (1) ;
f) mounting of a mudguard (20) at a position defined by the
mudguard holder (1).

12. A method according to claim 11, **characterized in that** the adjustment in step b) comprises the following partial steps:
b1) adjustment of the mudguard support (1) with respect to a door;
b2) adjustment of the mudguard support (1) with respect to a gauge (17) of the hood.

13. A method according to claim 11 or 12, **characterized in that** it further comprises the following steps:
c) placement of a gauge on the adjusted and fastened mudguard support (1);
d) adjusting and placing a hood by means of the gauge placed in step c).

14. A method according to one of the claims 11 to 13, **characterized in that** if the mudguard support (1) and the mudguard (20) comprise cooperating guide surfaces (13; 21, 22) which in contact with one another guide a movement of the unfastened mudguard (20) towards the mudguard support (1) in two degrees of freedom, the step f) comprises the displacement of the mudguard (20) towards the mudguard support (1) up to the defined position when the guide surfaces (13; 21, 22) touch one another.

15. A method according to one of the claims 11 to 14, **characterized in that** if with respect to the mudguard carrier (1) and the mudguard (20) the one comprises an opening (14) and the other a projection (24) that can be inserted in an interlocking manner in the opening (14), the step f) comprises the insertion of the projection (24) into the opening (14).

## Revendications

1. Carrosserie de véhicule à moteur avec une caisse brute résistante à la peinture et au moins une aile (20) faite d'un matériau ne pouvant pas être peint en même temps que la caisse brute, qui est retenu sur la caisse brute par un support d'aile (1) fait d'un matériau résistant à la peinture et orientable par rapport à la caisse brute et qui peut être fixé dans une seule position sur le support d'aile (1), dans laquelle le support d'aile (1) comporte un étrier (2) surmontant un logement de roue (19) et deux bras (3, 4) s'écartant de l'étrier (2) vers le bas de part et d'autre du logement de roue (19).

2. Carrosserie de véhicule à moteur selon la revendication 1, **caractérisée en ce que** le support d'aile (1) et l'aile (20) présentent des surfaces de guidage (13 ; 21, 22) coopérant entre elles qui guident, en contact l'une avec l'autre, un mouvement de l'aile (20) non fixée vers le support d'aile (1) dans deux degrés de liberté qui permettent d'atteindre la position unique.

3. Carrosserie de véhicule à moteur selon la revendication 2, **caractérisée en ce que** l'une des surfaces de guidage (21 ; 22) est une surface plane qui croise une deuxième surface plane (22 ; 21).

4. Carrosserie de véhicule à moteur selon l'une des revendications précédentes, **caractérisée en ce que** soit le support d'aile (1), soit l'aile (20) comporte au moins une ouverture (14) et l'autre une saillie (24) introduite en correspondance de forme dans l'ouverture (14).

5. Carrosserie de véhicule à moteur selon l'une des revendications précédentes, **caractérisée en ce que** le support d'aile (1) est fixé à la caisse brute par des vis (8) qui traversent des trous oblongs (6) du support d'aile (1) s'étendant sensiblement dans le sens longitudinal de la carrosserie.

6. Carrosserie de véhicule à moteur selon la revendication 5, **caractérisée en ce que** les vis (8) traversent les trous oblongs (6) avec un jeu dans le sens transversal de la carrosserie.

7. Carrosserie de véhicule à moteur selon l'une des revendications précédentes, **caractérisée en ce que** l'aile (20) s'appuie sur l'étrier (2) par l'intermédiaire d'au moins un élément de tampon (12) flexible verticalement et/ou dans le sens de la marche.

8. Carrosserie de véhicule à moteur selon l'une des revendications précédentes, **caractérisée en ce que** l'aile fait partie d'un module d'aile retenu par le support d'aile, qui comprend en outre au moins un phare ou une monture de phare.

9. Carrosserie de véhicule à moteur selon l'une des revendications 1 à 7, **caractérisée en ce qu'**au moins un phare ou une monture de phare (28) est intégré dans le support d'aile (1).

10. Carrosserie de véhicule à moteur selon l'une des revendications précédentes, **caractérisée en ce que** l'aile (20) est faite d'une matière thermoplastique.

11. Procédé pour le montage d'une carrosserie de véhicule à moteur, en particulier d'une carrosserie de véhicule à moteur selon l'une des revendications précédentes, comprenant les étapes de :
a) préparation d'une caisse brute ;
b) ajustement puis fixation d'un support d'aile (1) sur la caisse brute ;
e) peinture de la caisse brute en même temps que du support d'aile (1) ;
f) montage d'une aile (20) à un endroit défini par le support d'aile (1).

12. Procédé selon la revendication 11, **caractérisé en ce que** l'ajustement dans l'étape b) comprend les étapes suivantes :
b1) ajustement du support d'aile (1) par rapport à une porte ;
b2) ajustement du support d'aile (1) par rapport à un gabarit de capot (17).

13. Procédé selon la revendication 11 ou 12, **caractérisé en ce qu'**il comprend en outre les revendications de :
c) placement d'un gabarit sur le support d'aile (1) ajusté et fixé ;
d) ajustement et fixation d'un capot à l'aide du gabarit mis en place dans l'étape c).

14. Procédé selon l'une des revendications 11 à 13, **caractérisé en ce que** lorsque le support d'aile (1) et l'aile (20) présentent des surfaces de guidage (13 ; 21, 22) coopérant entre elles, qui guident, en contact l'une avec l'autre, un déplacement de l'aile (20) non fixée vers le support d'aile (1) dans deux degrés de liberté, l'étape f) comprend la translation de l'aile (20) vers le support d'aile (1) lorsque les surfaces de guidage (13 ; 21, 22) se touchent, jusqu'à un endroit défini.

15. Procédé selon l'une des revendications 11 à 14, **caractérisé en ce que** lorsque soit le support d'aile (1), soit l'aile (20) comprend au moins une ouverture (14) et l'autre une saillie (24) pouvant être introduite en correspondance de forme dans l'ouverture (14), l'étape f) comprend l'introduction de la saillie (24) dans l'ouverture (14).
